# EUROPEAN PATENT SPECIFICATION

(11) **EP 2 364 668 B1**
(45) Date of publication and mention of the grant of the patent: **20.11.2013**
(21) Application number: 10191050.3
(22) Date of filing: 12.11.2010
(51) Int. Cl.: A61C 8/00

(54) **Tool for creating a perforation or cavity in the bone structure in contact with the sinus membrane**
Werkzeug zur Erzeugung einer Perforation oder Kavität in der Knochenstruktur in Kontakt mit der Sinusmembran
Outil de création d'une perforation ou cavité dans la structure osseuse en contact avec la membrane de sinus

(30) Priority: 16.02.2010 US 706209
(43) Date of publication of application: 14.09.2011
(73) Proprietor: Dricot, Roland, 1703 Schepdaal (BE)
(72) Inventor: Dricot, Roland, 1703 Schepdaal (BE)
(74) Representative: De Baere, Ivo

(56) References cited:
- EP-A1- 0 515 274
- WO-A1-2009/000052
- AT-B1- 504 780
- DE-B3- 10 322 869
- US-A- 3 762 052
- US-A1- 2006 084 034

## Description

### FIELD OF THE INVENTION

The present invention relates to a tool for creating a perforation or cavity in the bone or bone structure in contact with the sinus membrane.

### BACKGROUND TO THE INVENTION

The perforation or cavity created by the tool in accordance with the present invention may be used to place an implant, particularly a dental implant. Dental implants may be used to replace lost teeth. The body of dental implants is normally made of titanium. Dental implants are discussed in more detail in patent application WO 2009/000052.

A first known procedure for implant placement in the upper posterior maxilla region is the traditional sinus lift by a surgical operation (Tatum 1989).

The bony reconstruction of the upper posterior maxilla requires the integrity of the sinus membrane (also known as "Schneider's membrane"). When the height of the alveolar crest is insufficient, bone thickness is increased using a sinus lift technique. Classically, the upper lateral wall of the maxilla is trepanned, the sinus membrane is lifted manually from the sinus floor and a graft is inserted through osteotomy. The graft material is introduced in the pocket created between the sinus floor and the lifted sinus membrane. The injected bone inductor is a substance able to promote bone generation. The graft is set separately or in combination with the implant placement. Statistically, this procedure has a success rate of about 30% .

As an alternative, intra-lift procedures have been developed during the last years with variable success rates.

Watzek's patent application WO 2009/062225 describes a surgical instrument able to introduce a flowable medium in the perforated upper maxilla for lifting the Schneider membrane from the sinus floor. A set of special drills is used to perforate the upper maxilla; some drills have cutting and non-cutting portions in order to minimize the risk of perforating the Schneider membrane during drilling. Then, through the opening in the sinus floor, the flowable medium is introduced by the surgical instrument, to lift the Schneider membrane.

Watzek's patent application AT 504 780 also discloses a drill having two portions: a peripheral, rotating portion that cuts, and a central portion. The central portion does not rotate and can move with respect to the peripheral portion in the axial direction of the drill. The central portion has at least one opening for a cooling fluid that cools the drill and the bone during the drilling operation. The cooling fluid also serves to remove the bone debris resulting from drilling. Near the end of the drilling phase, the central portion is moved forward in the axial direction, preferably by tapping, so that the small remaining portion of the sinus floor is broken off and is lifted by the central portion, together with the Schneider membrane.

Another technique is described in a publication by Pommer and Watzek, The International Journal of Oral & Maxillofacial Implants, p. 817-822, Vol. 24, Number 5, 2009. In this study, the sinus floor is punctured by a drill that has a rounded tip, in order to prevent perforating the sinus membrane, and a radiopaque gel is then injected through the puncture to separate and elevate the sinus membrane from the sinus floor.

Another technique is disclosed in "An 8-Year Retrospective Study: 1,100 Patients Receiving 1,557 Implants Using the Minimally Invasive Hydraulic Sinus Condensing Technique", L. Chen and J. Cha, Journal of Periodontology, March 2005, Vol. 76, Number 3, p. 482-491. A hole is drilled in the alveolar crest, and drilling ceases about 1 mm short of the sinus floor. The surgeon then downsizes to a 2 mm sinus bur for the purpose of forming a narrow conical shape at the end of the hole. While rotating, the 2 mm sinus bur is gently tapped through the cortical bone of the sinus floor just hard enough to form a pinhole. At this stage, hydraulic pressure from the hand-piece of the drill is introduced to the surgical site, providing enough force to begin the lifting of the membrane from the sinus floor. Once the membrane is loosened, hydraulic pressure is ceased. The membrane is then at rest but slightly detached.

Chen's patent application US 2009/0258328 discloses a dental implant method and apparatus, wherein a dental implant may be placed during one surgery by extracting a tooth from a socket, drilling a hole through crestal bone at the top of the socket, lifting sinus membrane from the sinus floor by pulsing water through the hole and separating the sinus membrane from the crestal bone, then inserting bone mixture through the hole and between the sinus membrane and the crestal bone to increase the thickness of crestal bone. A hydraulic dental instrument is provided that pulses water through the drilled hole and separates the sinus membrane from the sinus floor.

Ristic in DE 10322869 also discloses a device for performing a sinus lift that includes a tool, e.g. an osteotome or a drill, and a liquid source that provides liquid under pressure to the end of the tool while drilling. Pressurization of the liquid is discontinuous and includes stages of high and of low pressure. The pulsating liquid forms a kind of floating screen in front of the tool, which avoids the sinus membrane being pierced by the tool.

In the patent application that we already introduced under WO 2009/000052 we disclosed that when drilling a perforation or cavity in the upper maxilla, which is in contact with the sinus membrane, the sinus membrane can be progressively detached from the upper maxilla, and this during the drilling operation, when the drill is close to the sinus membrane while still inside the upper maxilla, and before the upper maxilla is completely pierced. The tool disclosed in WO 2009/000052 includes a drill having a free end and a channel adapted for supplying a liquid under pressure to the free end of the drill. The tool further includes a source of liquid under pressure, such that the liquid flows partially into and through the upper maxilla bone toward the sinus membrane while drilling the upper maxilla. The pressure of the liquid supplied by the liquid source, and the liquid flow, are such that a portion of the supplied liquid passes through the upper maxilla bone to detach the sinus membrane, while drilling.

A pocket of liquid is then formed between the sinus floor and the sinus membrane before the drill reaches the sinus floor. As such, when the drill pierces the sinus floor, the sinus membrane is already lifted and hence cannot be perforated by the drill; moreover the pocket of liquid protects the membrane against the drill.

### SUMMARY OF THE INVENTION

The present invention is a significant improvement of the tool disclosed previously in WO 2009/000052and AT504780. We have found that it is very important that the pressure and the flow rate of the liquid at the free end of the drill are very well controlled, in order to obtain good results, such as a progressive detachment of the sinus membrane from the sinus floor over a desired surface (e.g. 1 cm²), thanks to bone porosity. If the sinus membrane is lifted over a too large surface, the bone grafting material injected afterwards will spread over a too large surface. The bone height is than inadequate for implant placement. Also the amount of liquid that is provided to and trapped under the sinus membrane (e.g. 1 cm³) is important. If a too large liquid pocket is formed under the sinus membrane too quickly, there is an important risk to "drown" the sinus. On the other hand, the amount of liquid under the sinus membrane must be large enough so that the sinus membrane is well lifted and that there is no risk of damaging it when the drill pierces the sinus floor. The tool in accordance with the invention has design specificities that ensure appropriate and automatic control of the pressure and of the flow rate of the liquid at the free end of the drill, so that excellent results are obtained.

The invention as claimed includes a flow adapter for diverting a portion of the liquid that enters the channel of the drill. The remaining flow of liquid at the free end of the drill is thus smaller (or at most equal, if the diverted portion is zero) than the flow of liquid entering the channel. The flow of liquid at the free end can thus be adapted to the drilling conditions including the bone height, bone quality and capacity, so that an appropriate flow of liquid enters the bone.

An open space is present in the channel of the drill, between an insert into the channel and the inner wall of the channel, so that the diverted flow flows back into this open space, in the direction opposite to that of the incoming liquid in the insert.

The invention has numerous advantages. The sinus membrane is lifted reliably, and under controlled conditions, so that there is no risk to perforate the sinus membrane. Further, the sinus intralift grafting and implant placement take a very short time (about half an hour for bilateral intralift and placement of 4 implants) and the entire intervention is a one step process that can be achieved in a private dental or implant practice. If the alveolar crest is high enough (about 3 mm or more), the graft is combined with the implant placement; otherwise, the implant is placed later, after graft ossification. Another main advantage is that it is not necessary to get a very precise knowledge of the crestal bone height before the intervention. If the crestal bone height is known with a precision of about 2 mm, this is sufficient for a reliable intervention.

Without flow modulation, the liquid at the free end of the drill can only pass through bone or is evacuated through the small space between the drill and the wall of the already drilled channel. If crestal bone height is important, e.g. 7 mm, the pressure will increase very considerably during bone progression, generating an excess of liquid flow into the bone and into the sinus cavity, leading to a sinus "drowning" in many cases. In case of sinus "drowning", the Schneider membrane is damaged, and liquid flows into the sinus cavity. The sinus is then not well lifted or simply not lifted at all. The injected bone grafting material can then spread over a too large surface, and the implant will not be properly placed.

The present invention allows excellent control of the flow rate and the pressure at the free end of the drill, thus avoiding sinus "drowning".

To pierce the upper maxilla bone completely, the practitioner preferably uses a set, or kit, of drills, that are used in a given order, depending on residual bone height. Usually (unless the height of the alveolar crest is very small) a cavity is created by means of a first drill. The cavity is then deepened by a second drill, etc. until the last drill pierces the upper maxilla bone.

The invention also includes a kit of drills adapted to control the pressure and the flow rate at the free end of the drills.

### BRIEF DESCRIPTION OF THE DRAWINGS

Embodiments of the invention will be described, by way of example, with reference to the accompanying drawings in which:
Fig. 1 is a schematic view of the prior art tool disclosed in WO 2009/062225;
Fig. 2 shows an embodiment of a drill in accordance with the invention while drilling into the upper maxilla bone;
Figs. 3 to 5 illustrate embodiments of drills in accordance with the invention;
Figs. 6 to 8 illustrate embodiments of drilling heads (at the free end of the drill) according to the invention;
Figs. 9 and 10 show embodiments of drill kits in accordance with the invention.

### DETAILED DESCRIPTION OF PREFERRED EMBODIMENTS

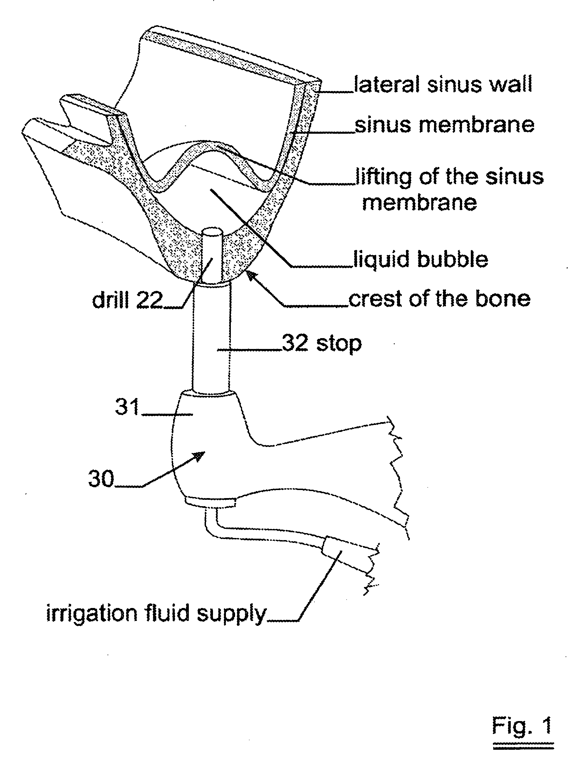

Figs. 1 illustrates the prior art tool disclosed in WO 2009/062225, of which the present invention is an improvement, and which is discussed here for a better understanding of the present invention.

Fig. 1 is a schematic perspective view of a perforation device that carries a drill 22. The device comprises a support 30 whose head 31 is equipped with a means for driving the drill 22 in rotation. The head 31 is associated with a stop 32 whose position is advantageously adaptable as a function of the length of the movement for piercing the bone with the guide drill. The irrigation system of this tool makes it possible to detach the Schneider membrane before the tool pierces the sinus floor, thanks to the delivery of a liquid under pressure to the free end of the drill 22 during drilling. The pressure is advantageously capable of passing the liquid through the bone.

The liquid that is used in embodiments according to the invention is preferably a normal saline solution (sometimes called physiological saline solution). It may also e.g. be water, an isotonic saline solution, a solution of water containing from 0.5% by weight to 3% by weight of NaCl, for example from 0.7 to 1.5% by weight of NaCl. A radiopaque product may be added to the liquid in order to follow the detachment and lifting of the membrane in real time. The liquid is pressurized, either continuously or otherwise.

When the liquid is correctly pressurized, part of the liquid passes through the porous structure of the bone. The alveolar crest consists mainly of bone mass of type III and IV, which are porous to the liquid. The bone structures (of the palate and the skull) that support the alveolar crest however belong to bone mass of type I, and are impermeable to the liquid.

It has been shown that there is no risk that the liquid passes to other anatomical structures than the alveolar crest; the liquid forms a pocket below the Schneider's membrane, and does not pass e.g. to the soft tissues of the face. The liquid is totally harmless for the bone structure.

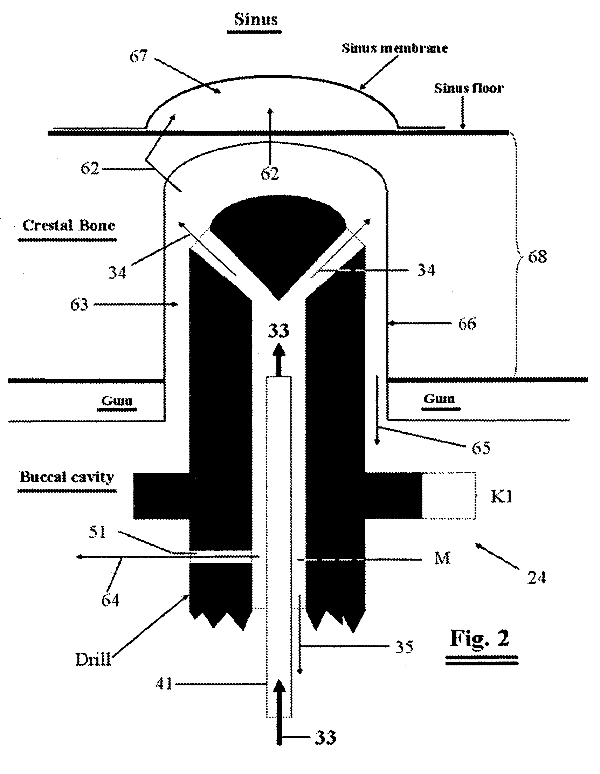

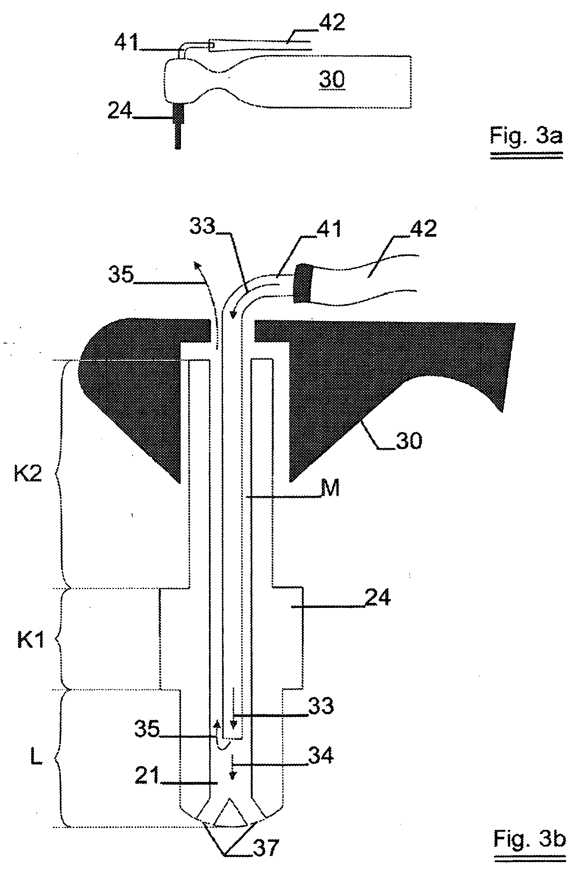

Figs. 3a and 3b show a tool according to the invention that includes a flow adapter, as will now be explained. Fig. 3a shows a drill 24 mounted in a support 30. Pressurized liquid from a pump (not shown) flows through a tube 42 to an insert 41 in the channel of drill 24. The pumps used for this kind of interventions usually supply a constant liquid flow, independent of the rotational speed of the drill. Drills in accordance with the invention may be used with such pumps, that are currently, worldwide, standard for these interventions; the drills may be used with other pumps as well. The drill 24 is shown schematically in more detail in Fig. 3b (in order to keep the drawing clear, parts such as e.g. the driving mechanism of the drill and the mounting of the insert are not shown). The outer diameter of the insert 41 is smaller than the inner diameter of the channel 21, so that an open space M is created between the inner wall of the channel and the insert. The pump supplies a flow 33 of liquid to the insert. Flow 33 streams from the insert into the channel 21, but it does not necessarily completely stream out of the openings 37 at the free end of the drill. Because of the pressure of the liquid in the drilled cavity and the hydraulic resistance of the bone, a portion of the liquid flows back through the open space M. Liquid flow 33 is split into flow 34 and backflow or reverse flow 35. Flow 34 is supplied to the free end of the drill and flow 35 flows back through the open space M and through the support 30 (and may e.g. end up on the floor, which is not a problem since the amount of liquid is quite small). How much liquid is supplied through the channel to the free end depends on the size of the open space M, on its length (i.e. the dimension parallel to the axis of the drill), and on the pressure of the liquid outside of the free end and in the drilled cavity: if this pressure is higher, the backflow 35 of liquid will be larger, and less liquid 34 will be supplied to the free end. When drilling, in the beginning normally a portion of the liquid at the free end of the drill flows back through the space between the drill and the wall of the drilled bone channel (see Fig. 2, where this portion of liquid is indicated by reference numeral 63). When continuing to drill, the hydraulic resistance of this space between the drill and the wall of the drilled bone channel increases, since the drilled bone channel becomes deeper. Now, less and less liquid 63 flows back, and more liquid flows back through the open space M.

This backflow system avoids that the pressure inside the bone structure becomes too high, which could be harmful for the bone tissue (a high pressure could occur if a large liquid flow would pass through a large bone height). It also avoids that, for large bone heights, a too large liquid pocket would be formed under the sinus membrane, which would "drown" the sinus. We have found that a liquid pocket having a volume of about 1 to 3 ml is optimal.

The backflow feature discussed above is just one embodiment of a flow adapter diverting a portion of the liquid after entering the channel of the drill, such that the flow of liquid supplied to the free end of the drill is potentially smaller than the flow of liquid entering the channel. Such a flow adapter modulates, or adapts automatically, the flow of liquid and its pressure during the drilling operation, depending on the drilling conditions (such as the bone height). An important parameter of the backflow system is the size of the open space M; this is discussed more in detail further below.

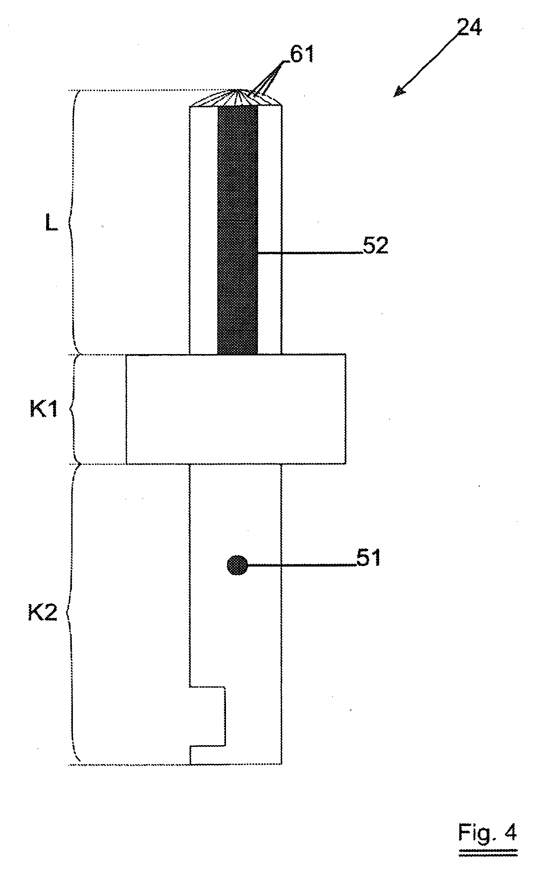

The drill 24 shown in the embodiment of Fig. 3b has three segments, L, K1 and K2. Segment K1 is a stop; it determines the maximal working length L of the drill. When the stop K1 touches the bone, progression with this drill is stopped. Preferably the diameter of segment K1 is about 2 mm larger than the diameter of segment L. Segment L includes cutting elements near the free end, such as cutting edges (shown in Fig. 4, cutting edges 61), cutting elements including diamond powder, or other cutting elements as known in the art. The outer surface of segment L is preferably smooth, i.e. non-cutting. Segment K2 is the portion of the drill behind the stop.

Fig. 2 shows a drill in accordance with the invention while drilling into the upper maxilla bone, through a crestal bone height 68. Fig. 2 illustrates especially the liquid flows through the drill and the bone structure. The liquid flow 33 supplied through the insert 41 is split into flows 34 supplied to the free end of the drill and backflow 35. The liquid at the free end of the drill can follow several paths. A first portion 62 flows through the bone to the sinus membrane and gets trapped between the sinus membrane and the sinus floor to join the liquid 67 already present there. Another portion 63 of the liquid at the free end flows back through the space between the drill and the wall of the drilled bone channel 66, and flows, as designated by reference sign 65, into the buccal cavity. Further, a liquid flow 64 is shown through a transverse opening 51 of the drill; such a transverse opening is also discussed with reference to Fig. 4.

Fig. 4 shows an embodiment of a drill comprising a transverse opening 51 that connects the channel 21 of the drill to the outside surface of the drill. A drill may comprise no, one, or a plurality of transverse openings 51.These transverse openings evacuate liquid from the channel, and also modulate the flow of liquid supplied to the free end of the drill. They also affect the liquid pressure at the free end. They are also an embodiment of the flow adapter discussed above. Transverse openings may pierce the outer surface of the drill perpendicular to its axis, or inclined under an angle. Preferably, they are located in segment K2 or in segment K1 of the drill. A transverse opening may have a circular shape, an oval shape, or another shape. Circular transverse openings preferably have a diameter between 0.1 and 3 mm. The diameter of the transverse openings may be adapted; e.g. for a specific drill, transverse openings with a larger diameter may be chosen to obtain a lower pressure at the free end of the drill.

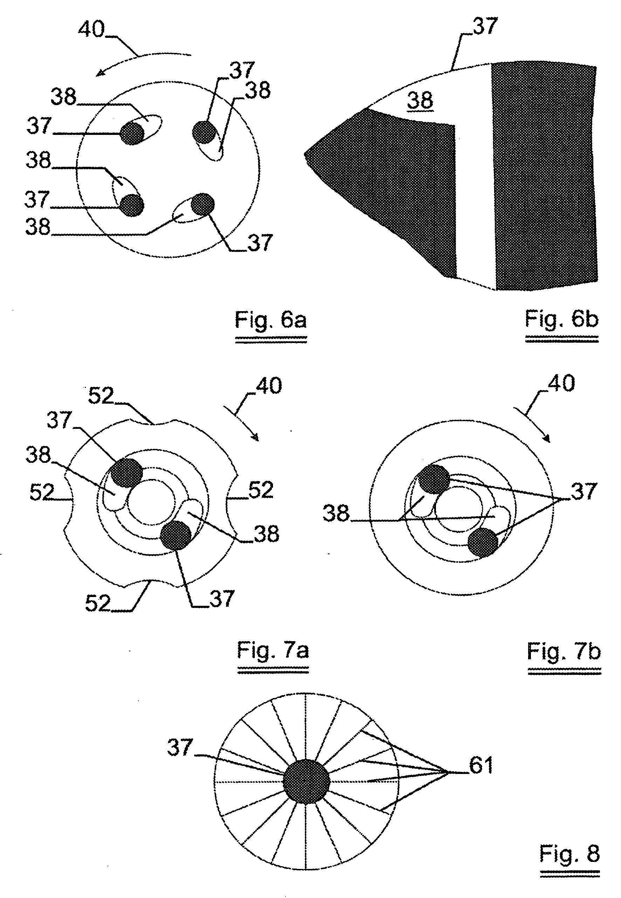

A drill may also comprise one or more drainage gutters 52, shown in Figs. 4 and 7a, in segment L of the drill. They help to evacuate liquid from bone, and also to evacuate bone debris. They also affect the liquid pressure at the free end, and the flow of liquid into and through the bone.

A drill may comprise in combination with the feature backflow, any of the following features: transverse openings, drainage gutters, and backflow; i.e. only backflow may be present, or backflow and one or more transverse openings, or backflow and transverse openings and drainage gutters; etc.

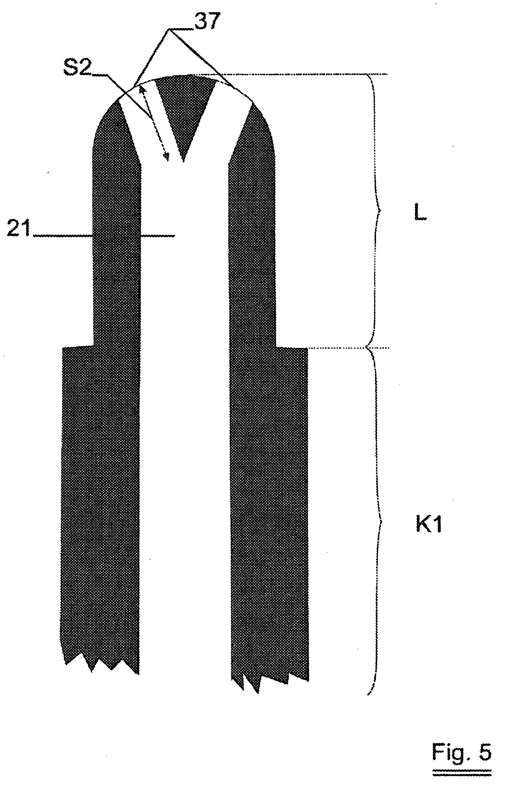

A drill may have one opening 37 at its free end through which the liquid of the channel 21 is supplied to the cavity, the drill may also have two openings 37 or four openings... Different embodiments are shown in Figs. 5 to 8. If there are two or more openings, channel 21 is split into sub-channels; the length of these sub-channels, S2 (see Fig. 5), is preferably less than 15 mm. Length and diameters of these sub-channels influence the flow of liquid and the pressure at the free end.

In order to prevent that an opening 37 of the drill gets blocked, e.g. by bone debris, the drill may comprise an anti-blocking gutter 38 at its free end. Figs 6 to 8 show different embodiments. In Fig. 8, where the drill has only one opening, no anti-blocking gutter is present (the opening may be cleaned regularly by the practitioner). The anti-blocking gutters 38 are preferably located, with respect to the corresponding opening 37, in the direction opposite to the rotation direction 40 of the drill. The anti-blocking gutters also allow easier cleaning of the openings.

Referring now again to Fig. 3b, an important parameter of the backflow system is the size of the open space M, which is determined by the difference in diameter between the channel 21 and the insert 41. If the open space M is larger, the backflow will be larger. Less liquid will then enter the bone or bone structure, and the pressure at the free end of the drill will be reduced. If the pressure would increase too much near the free end of the drill, automatically more liquid will flow back through the open space, thus regulating the pressure automatically. Thus, pressure variations can be considered to be automatically managed, the pressure and the flow of liquid supplied at the free end being adapted to the drilling conditions such as the drilling depth. In this way, too high pressures and "drowning" of the sinus are avoided, and an optimal detachment of the sinus membrane is obtained. An optimal detachment includes that the membrane is detached over an area that is not too large. An optimal detachment area is about 1 to 3 cm²; the optimal amount of liquid in the pocket under the membrane is about 1 to 3 cm³.

To obtain these results, it is advantageous to use a kit of drills in accordance with the invention, that contains drills that have to be used in a defined order. Different kits of drills may be used, depending on the height of the alveolar crest. The number of drills of a kit and their characteristics are adapted to the height, or better, approximate height ranges, of the alveolar crest for which these drills are used. In practice, for a specific intervention, the height of the alveolar crest is not constant. As mentioned already above, it is one of the advantages of the invention that that it is not necessary to have a very precise knowledge of the crestal bone height before the intervention.

First, a preferred embodiment of a kit of drills for an alveolar crest of e.g. 6 or 7 mm is discussed. Initially, the practitioner uses a first drill optimized for a first drilling depth; then he uses a second drill optimized for a second drilling depth, deeper than the first one; he then possibly uses a third drill to drill even deeper, and so on. The drilling depths of the drills are preferably defined by the location of their stops K1. An important parameter that is optimized is the size of the open space M, which determines the backflow. For a drill belonging to this kit of drills, i.e. for an alveolar crest of e.g. 7 mm, the optimal backflow may be as large as 90 % of the flow entering the channel of the drill, whereas the backflow may be only about 10 to 30 % for a drill belonging to another kit of drills for an alveolar crest of 4 mm, for example. To obtain a higher backflow, the inner diameter of the channel 21 is taken larger, since the outer diameter of the insert 41 is usually fixed. By adapting the inner diameter 21 of the drill, and thus the backflow, to the drilling conditions, too high pressure values at the free end of the drill are avoided. Thus, by means of the flow adapter of each drill on the one hand, and by making the characteristics of the flow adapters dependent on the characteristics of the drills on the other hand (such as a larger inner diameter, and thus a larger backflow, for a kit of drills for a higher alveolar crest), pressure variations at the free end of the drill can be decreased.

In case the height of the alveolar crest is smaller than e.g. about 4 mm, the kit of drills is preferably different. Here, it is important to have a large liquid flow into and through the bone, in order to have an optimal detachment of the sinus membrane. The backflow is e.g. 10 to 20 % in this case, or even smaller. Therefore, the diameter difference between the channel 21 and the insert 41 is very small. Preferably, the drill or drills of this kit have no drainage gutters. It is further preferred that they do not have transverse openings. In one embodiment, the first drill has a diameter of about 2.5 mm and the second drill has a diameter of about 3.3 mm. In another embodiment, the first drill has a diameter of 3.3 mm. Further, the opening or openings 37 in the free end are preferably as centered as possible. Because of the small bone height, the drills advantageously advance slowly in the bone, so that enough liquid can pass through the bone to the sinus membrane. This may be achieved e.g. by using cutting elements with fine diamond powder or with cutting edges that are little abrasive.

In the kits in accordance with the invention, the drills preferably have diameters between 1 and 6 mm. The length of section K1 is preferably between 1 and 15 mm.

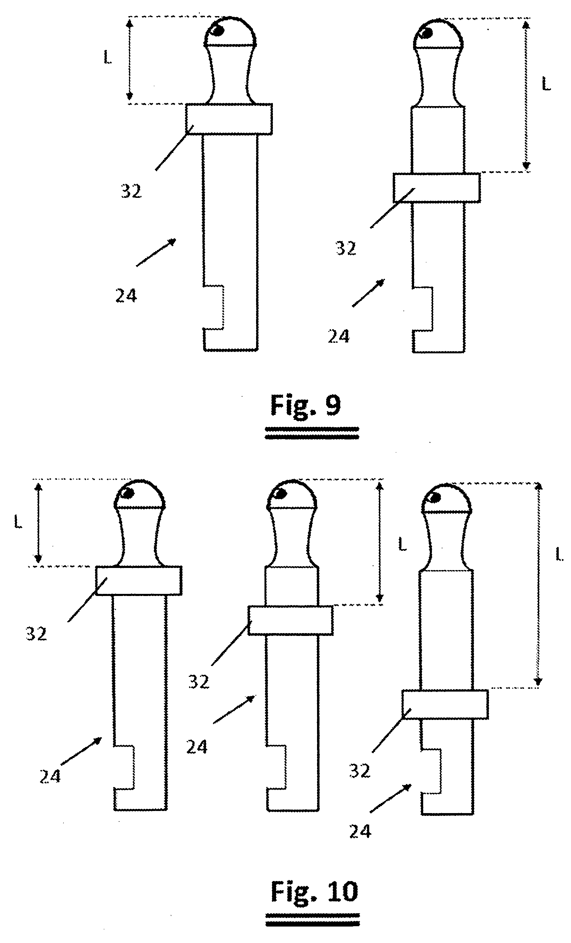

Figs. 9 and 10 show two embodiments of drill kits in accordance with the invention.
Fig. 9 shows a kit used when the crestal bone height is approximately 4 to 5 mm. The kit shown consists of two drills with stops at respectively 3 mm, for the first drill, and 6 mm, for the second drill. The drills have an outer diameter of 3,3 mm and an inner diameter of 0,74 mm. They are used with an insert having an outer diameter of 0,72 mm, so that the size of the open space M is this case 10 µm.

The kit shown in Fig. 10 is for use with a crestal bone height of approximately 6 mm. The three drills of the kit have stops at respectively 3 mm, 5 mm and 8 mm.

It is important to use a kit of drills having dimensions with tight tolerances, in order to obtain an optimal result.

The invention is not limited to the embodiments disclosed above; the scope of the invention is defined by the appended claims.

## Claims

1. Tool for creating a perforation or cavity in a bone or bone structure (OS) in contact with a sinus membrane (MS), said tool comprising a drill (22,24) having a free end and a channel (21) for supplying a liquid under pressure to said free end, said drill having at least one opening (37) at said free end for supplying said liquid to said perforation or cavity, said tool further comprising an insert (41) for being inserted into said channel (21) of said drill and for being connected to a source of said liquid under pressure, for thus supplying said liquid to said channel (21), and thus defining a first flow path for said liquid (33) to flow through said insert (41) to said channel (21), wherein an outer diameter of said insert is smaller than an inner diameter of said channel, thus creating an open space (M) between said insert and said channel, thus defining a second flow path for a backflow (35) of said liquid, flowing in a direction opposite to a direction of a flow of said liquid (33) flowing through said insert, and wherein said insert (41) and said free end define a third flow path for said liquid (34) to flow from said insert (41) to said free end; said first, said second and said third flow paths are configured such that said liquid (33) flowing by said first flow path can split at a split location into said liquid (35) flowing by said second flow path and said liquid (34) flowing by said third flow path, **characterized in that** said first, said second and said third flow paths are configured such that at said split location said liquid (33) flowing by said first flow path is flowing in a first direction, said liquid (35) flowing by said second flow path is flowing in a second direction opposite to said first direction and said liquid (34) flowing by said third flow path is flowing in said first direction, for automatically regulating the pressure of said liquid supplied at said free end, such that said second flow of said liquid (34) supplied to said free end of said drill is smaller than or equal to said first flow of said liquid (33) entering said channel, thus avoiding the pressure inside said bone or bone structure (OS) becoming too high, and thus allowing said liquid to flow partially into and through the bone or bone structure toward the sinus membrane while drilling the bone or bone structure with the drill, which allows to perform a progressive detachment of the sinus membrane when the drill is close to the sinus membrane while still being inside the bone or bone structure, and before completely piercing the bone or bone structure.

2. Tool according to any one of the preceding claims wherein said drill has an outside surface including a drainage gutter (52) for liquid evacuation.

3. Tool according to according to any one of the preceding claims wherein said drill comprises a transverse opening (51) connecting said channel to an outside surface of said drill, for liquid evacuation.

4. Tool according to according to any one of the preceding claims wherein said drill comprises an anti-blocking gutter (38) at its free end for preventing said free end from being blocked when drilling said bone or bone structure.

5. Tool according to any one of the preceding claims wherein said drill comprises a plurality of said openings (37) for said liquid at said free end.

6. Tool according to any one of the preceding claims wherein said free end of said drill comprises a cutting element (61).

7. Tool according to any one of the preceding claims wherein said drill comprises a stop (32).

8. Tool according to any one of the preceding claims wherein said drill has an outer surface parallel to a symmetry axis of said drill, and wherein said outer surface is smooth.

9. Combination of an insert (41) and a drill kit for creating a perforation or cavity in a bone or bone structure (OS) in contact with a sinus membrane (MS), said drill kit comprising at least one drill (22, 24),
wherein said insert (41) and each drill (22, 24) out of said drill kit are defined as the insert and the drill of the tool of claim 1.

## Patentansprüche

1. Werkzeug zum Erstellen einer Perforation oder eines Hohlraums in einem Knochen oder einer Knochenstruktur (OS) in Kontakt mit einer Kieferhöhlenmembran (MS), wobei das Werkzeug einen Bohrer (22, 24) umfasst, der ein freies Ende und einen Kanal (21), um dem freien Ende eine Flüssigkeit unter Druck zuzuführen, aufweist, wobei der Bohrer mindestens eine Öffnung (37) an dem freien Ende aufweist, um die Flüssigkeit der Perforation oder dem Hohlraum zuzuführen, wobei das Werkzeug ferner eine Einlage (41) umfasst, um in den Kanal (21) des Bohrers eingelegt zu werden und an eine Quelle der Flüssigkeit unter Druck angeschlossen zu werden, um somit die Flüssigkeit dem Kanal (21) zuzuführen, und somit einen ersten Strömungsweg für die Flüssigkeit (33) zu definieren, damit sie durch die Einlage (41) zu dem Kanal (21) fließt, wobei ein Außendurchmesser der Einlage kleiner als ein Innendurchmesser des Kanals ist, so dass ein offener Raum (M) zwischen der Einlage und dem Kanal geschaffen wird, so dass ein zweiter Strömungsweg für eine Rückströmung (35) der Flüssigkeit definiert wird, die in einer Richtung fließt, die zu einer Richtung einer Strömung der Flüssigkeit (33) entgegengesetzt ist, die durch die Einlage fließt, und wobei die Einlage (41) und das freie Ende einen dritten Strömungsweg für die Flüssigkeit (34) definieren, damit sie von der Einlage (41) zu dem freien Ende fließt; wobei der erste, der zweite und der dritte Strömungsweg derart konfiguriert sind, dass sich die Flüssigkeit (33), die über den ersten Strömungsweg fließt, an einer Teilungsstelle in die Flüssigkeit (35), die über den zweiten Strömungsweg fließt, und in die Flüssigkeit (34), die über den dritten Strömungsweg fließt, teilen kann, **dadurch gekennzeichnet, dass** der erste, der zweite und der dritte Strömungsweg derart konfiguriert sind, dass an der Teilungsstelle die Flüssigkeit (33), die über den ersten Strömungsweg fließt, in eine erste Richtung fließt, die Flüssigkeit (35), die über den zweiten Strömungsweg fließt, in einer zweiten Richtung fließt, die der ersten Richtung entgegengesetzt ist, und die Flüssigkeit (34), die über den dritten Strömungsweg fließt, in die erste Richtung fließt, um automatisch den Druck der Flüssigkeit zu regulieren, die an dem freien Ende zugeführt wird, so dass die zweite Strömung der Flüssigkeit (34), die dem freien Ende des Bohrers zugeführt wird, kleiner oder gleich der ersten Strömung der Flüssigkeit (33) ist, die in den Kanal eintritt, wodurch vermieden wird, dass der Druck im Innern des Knochens oder der Knochenstruktur (OS) zu hoch wird, und wodurch also die Flüssigkeit teilweise in und durch den Knochen oder die Knochenstruktur zur Kieferhöhlenmembran fließen kann, während in dem Knochen oder der Knochenstruktur mit dem Bohrer gebohrt wird, wodurch eine allmähliche Abtrennung der Kieferhöhlenmembran erfolgen kann, wenn sich der Bohrer nahe an der Kieferhöhlenmembran befindet, während er sich immer noch im Knochen oder in der Knochenstruktur befindet, und bevor er den Knochen oder die Knochenstruktur vollständig durchbohrt.

2. Werkzeug nach einem der vorhergehenden Ansprüche, wobei der Bohrer eine Außenfläche aufweist, die eine Ablaufrinne (52) zur Flüssigkeitsableitung umfasst.

3. Werkzeug nach einem der vorhergehenden Ansprüche, wobei der Bohrer eine Queröffnung (51) umfasst, die den Kanal zur Flüssigkeitsableitung mit einer Außenfläche des Bohrers verbindet.

4. Werkzeug nach einem der vorhergehenden Ansprüche, wobei der Bohrer eine Blockierschutzrinne (38) an seinem freien Ende umfasst, um zu verhindern, dass das freie Ende blockiert wird, wenn in dem Knochen oder der Knochenstruktur gebohrt wird.

5. Werkzeug nach einem der vorhergehenden Ansprüche, wobei der Bohrer an dem freien Ende eine Vielzahl der Öffnungen (37) für die Flüssigkeit umfasst.

6. Werkzeug nach einem der vorhergehenden Ansprüche, wobei das freie Ende des Bohrers ein Schneidelement (61) umfasst.

7. Werkzeug nach einem der vorhergehenden Ansprüche, wobei der Bohrer einen Anschlag (32) umfasst.

8. Werkzeug nach einem der vorhergehenden Ansprüche, wobei der Bohrer eine Außenfläche aufweist, die parallel zu einer Symmetrieachse des Bohrers ist, und wobei die Außenfläche glatt ist.

9. Kombination aus einer Einlage (41) und einem Bohrersatz zum Erstellen einer Perforation oder eines Hohlraums in einem Knochen oder einer Knochenstruktur (OS) in Kontakt mit einer Kieferhöhlenmembran (MS), wobei der Bohrersatz mindestens einen Bohrer (22, 24) umfasst, wobei die Einlage (41) und jeder Bohrer (22, 24) aus dem Bohrersatz als die Einlage und der Bohrer des Werkzeugs nach Anspruch 1 definiert sind.

## Revendications

1. Outil pour créer une perforation ou une cavité dans un os ou une structure osseuse (OS) en contact avec une membrane sinusienne (MS), ledit outil comprenant un foret (22, 24) ayant une extrémité libre et un canal (21) pour fournir un liquide sous pression à ladite extrémité libre, ledit foret présentant au moins une ouverture (37) à ladite extrémité libre pour fournir ledit liquide à ladite perforation ou cavité, ledit outil comprenant en outre un insert (41) pour être inséré dans ledit canal (21) dudit foret et pour être connecté à une source dudit liquide sous pression, pour ainsi fournir ledit liquide audit canal (21), et ainsi définir un premier chemin d'écoulement pour ledit liquide (33) pour s'écouler à travers ledit insert (41) vers ledit canal (21), dans lequel un diamètre extérieur dudit insert est inférieur à un diamètre intérieur dudit canal, créant ainsi un espace ouvert (M) entre ledit insert et ledit canal, définissant ainsi un second chemin d'écoulement pour un refoulement (35) dudit liquide, circulant dans une direction opposée à une direction d'un écoulement dudit liquide (33) s'écoulant à travers ledit insert, et dans lequel ledit insert (41) et ladite extrémité libre définissent un troisième chemin d'écoulement pour que ledit liquide (34) s'écoule à partir dudit insert (41) vers la dite extrémité libre ; ledit premier, ledit deuxième et ledit troisième chemins d'écoulement sont configurés de manière à ce que ledit liquide (33) s'écoulant par ledit premier chemin d'écoulement peut se diviser à un emplacement de division dans ledit liquide (35) s'écoulant par ledit second chemin d'écoulement et ledit liquide (34) s'écoulant par ledit troisième chemin d'écoulement, **caractérisé en ce que** ledit premier, ledit second et ledit troisième chemins d'écoulement sont configurés de manière à ce qu'à l'emplacement de division, ledit liquide (33) s'écoulant par ledit premier chemin d'écoulement s'écoule dans une première direction, ledit liquide (35) s'écoulant par ledit second chemin d'écoulement s'écoule dans une seconde direction opposée à ladite première direction et ledit liquide (34) s'écoulant par ledit troisième chemin d'écoulement s'écoule dans ladite première direction, pour réguler automatiquement la pression dudit liquide fourni à ladite extrémité libre, de manière à ce que ledit second écoulement dudit liquide (34) fourni à ladite extrémité libre dudit foret est inférieur ou égal audit premier écoulement dudit liquide (33) entrant dans ledit canal, évitant ainsi que la pression dans ledit os ou ladite structure osseuse (OS) devienne trop élevée, et permettant ainsi audit liquide de s'écouler partiellement dans et à travers l'os ou la structure osseuse vers la membrane sinusienne tout en forant dans l'os ou la structure osseuse avec le foret, qui permet de réaliser un détachement progressif de la membrane sinusienne lorsque le foret est proche de la membrane sinusienne tout en étant encore à l'intérieur de l'os ou de la structure osseuse, et avant de complètement percer l'os ou la structure osseuse.

2. Outil selon l'une quelconque des revendications précédentes dans lequel ledit foret a une surface extérieure incluant une gouttière de drainage (52) pour évacuation du liquide.

3. Outil selon l'une quelconque des revendications précédentes dans lequel ledit foret comprend une ouverture transversale (51) reliant ledit canal à une surface extérieure dudit foret, pour évacuation du liquide.

4. Outil selon l'une quelconque des revendications précédentes dans lequel ledit foret comprend une gouttière antiblocage (38) à son extrémité libre pour empêcher ladite extrémité libre d'être bloquée pendant le forage dudit os ou de ladite structure osseuse.

5. Outil selon l'une quelconque des revendications précédentes dans lequel ledit foret comprend une pluralité desdites ouvertures (37) pour ledit liquide à ladite extrémité libre.

6. Outil selon l'une quelconque des revendications précédentes dans lequel ladite extrémité libre dudit foret comprend un élément coupant (61).

7. Outil selon l'une quelconque des revendications précédentes dans lequel le foret comprend une butée (32).

8. Outil selon l'une quelconque des revendications précédentes dans lequel ledit foret a une surface extérieure parallèle à un axe de symétrie dudit foret, et dans lequel ladite surface extérieure est lisse.

9. Combinaison d'un insert (41) et d'un kit de forage pour créer une perforation ou une cavité dans un os ou une structure osseuse (OS) en contact avec une membrane sinusienne (MS), ledit kit de forage comprenant au moins un foret (22,24), dans laquelle ledit insert (41) et chaque foret (22, 24) dudit kit de forage sont définis comme l'insert et le foret de l'outil de la revendication 1.
